# EUROPEAN PATENT APPLICATION

(11) **EP 4 112 550 A1**
(43) Date of publication of application: **04.01.2023**
(21) Application number: 21761082.3
(22) Date of filing: 16.02.2021
(51) Int. Cl.: C01B 33/12, C01B 32/324, C01B 32/348, C10B 57/10

(54) **METHOD AND DEVICE FOR PRODUCING A PRODUCT CONTAINING AMORPHOUS SILICA AND AMORPHOUS CARBON**

(30) Priority: 27.02.2020 RU 2020108527
(71) Applicant: Talanov, Vitalii Eduardovich, Moscow, 117321 (RU); Bogdanov, Mark Dmitrievich, Moscow, 123103 (RU)
(72) Inventor: MESHKOV, Sergei Anatolevich, Sankt-Peterburg, 194214 (RU); MISLAVSKII, Boris Vladlenovich, Moscow, 119021 (RU); ILIEV, Roman Lazirovich, Moscow, 101000 (RU); MASALEVICH, Anatolii Ivanovich, Moscow, 125047 (RU)
(74) Representative: Jeck, Jonathan
(86) International application number: PCT/RU2021/050037
(87) International publication number: WO 2021/173040

(57) **Abstract**

An invention relates to the processing of carbon-containing raw materials and can be used to obtain products containing amorphous silicon dioxide and amorphous carbon of various purity grades. The technical result is to simplify obtaining a product containing amorphous silicon dioxide and to increase the yield efficiency by reducing the exposure temperature on the carbon-containing raw material. The method to obtain a product containing amorphous silicon dioxide and amorphous carbon, comprising the steps in which the carbon-containing raw material is dried at a temperature of 150 - 200 ° C and subjected to heat treatment of the dried raw material at a temperature of 400 - 600 ° C, in which heat treatment is conducted in the presence of an activator made of fusible alloy. The apparatus for implementing the method is also provided.

## Description

An invention relates to the processing of carbon-containing raw materials and can be used to obtain products containing amorphous silicon dioxide and amorphous carbon of various purity grades.

Carbon-containing raw materials, such as rice hulls, form a mixture of amorphous silicon dioxide and amorphous carbon under certain heat treatments. Amorphous silicon dioxide of various purity grades is obtained depending on the exposure temperature, exposure time, and dosed supply of the oxidant, as well as the features of heat treatment.

At present, 3 types of amorphous silicon dioxide are used in industry: high-carbon, low-carbon, and carbon-free.

High-carbon silicon dioxide is used in agriculture as a soil amendment and a sorbent, e.g., for stormwater treatment.

Low-carbon silicon dioxide is used as an insulating material in metallurgy and construction.

Carbon-free amorphous silicon dioxide is used as a sorbent for purifying wastewater from heavy metals.

The prior art discloses a known method of obtaining amorphous silicon dioxide from rice hulls, described in the patent application RU 94031518 A1 published 10.07.1996. This method comprises the following: rice hulls are washed with water and/or mineral acid solution, then charred in the air within the temperature range of 120 - 500 °C. Then, the resulting ash is ground and subjected to oxidative roasting in a "fluidized bed" within the temperature range of 500 - 800 °C.

There is also a known method of obtaining low-carbon white ash from hulls for use in the production of construction materials, in particular, refractory materials, described in patent application US4049464 (A) published 20.09.1977, which is the closest analog of the claimed invention. The method comprises a heating the hulls of rice, wheat, oats, or barley in three stages to obtain the desired product of SiO₂: at the first stage, the hulls are heated within the range of 250 °C to 450 °C in the absence of air; at the second stage, heating continues at temperatures of 450 °C to 550 °C with the supply of oxidant to complete carbon burnout; at the third stage, heat treatment is conducted at temperatures of 700 °C to 800 °C. At the same time, to eliminate the possibility of silicon dioxide crystallization during the second stage, the hulls are treated with acid.

The prior art disadvantage is the complexity of technology for obtaining amorphous silicon dioxide and the low yield efficiency from raw materials as a result of silicon dioxide crystallization due to the high temperature (up to 800 °C), the probability of which is reduced because of additional raw materials treatment such as washing it with water or acid. In addition, the above-described methods to obtain amorphous silicon dioxide cause a significant violation of environmental safety due to the release of harmful or hazardous gases, in particular, CO (contained in the emitting pyrolysis or synthesis gases) into the atmosphere.

The technical result of the claimed invention is to simplify obtaining a product containing amorphous silicon dioxide and to increase the yield efficiency by reducing the exposure temperature on the carbon-containing raw material. It also ensures compliance with environmental safety requirements of the proposed method of obtaining by allowing the disposal (burning) of the emitting pyrolysis or synthesis gases.

Reducing the temperature and its exposure time is provided by using an activator during heat treatment of carbon-containing raw materials to obtain amorphous silicon dioxide. Such an activator is a fusible alloy, in particular, alloys based on lead, zinc, tin, etc.

To achieve this result, a method to obtain a product containing amorphous silicon dioxide is provided, which dries the carbon-containing raw material at a temperature of 150-200 °C, and it is heat-treated in the presence of an activator made of a fusible alloy at a temperature of 400-600 °C.

For higher amorphous silicon dioxide content in the final product, the obtained product can additionally be gasified at a temperature of 400-600 °C in the pyrolysis stage and/or roasted in an air stream (oxidizer) at a temperature of 400-700 °C.

To implement the claimed method to obtain a product containing amorphous silicon dioxide, an apparatus containing a drying unit, which provides moisture evaporation from the carbon-containing raw materials, and the reactor unit containing an activator made of a fusible alloy, which performs pyrolysis of dried carbon-containing raw materials, are also proposed. To heat the apparatus, achieve significant autonomy of the process of obtaining and maintaining the required temperature conditions of the process, the apparatus contains an afterburning unit to obtain and use the thermal energy by burning the emitting gases (pyrolysis gas or synthesis gas) inside the system. The afterburning unit serves, among other things, to ensure environmental safety of the processing of carbon-containing raw materials.

The apparatus may additionally contain a gasification unit, in which the process of carbon burnout (roasting) in the flow of air (oxidizer) heated in the afterburning unit is provided.

The finished product is discharged through the apparatus unloading unit.

The proposed invention advantage is also obtaining a product containing amorphous silicon dioxide with different quantitative content of amorphous carbon in it: high-carbon, low-carbon, and carbon-free, as part of single processing technology of carbon-containing raw materials, as well as using the thermal energy from the obtained gases.

The following will describe in more detail the embodiments of the claimed method to obtain a product containing amorphous silicon dioxide and the apparatus for its implementation.

### Brief description of the drawings

- Fig. 1: shows a functional diagram of the apparatus to obtain a product containing amorphous silicon dioxide.
- Fig. 2: shows the drying unit.
- Fig. 3: shows the reactor unit.
- Fig. 4: shows the gasification unit.
- Fig. 5: shows the afterburning unit.
- Fig. 6: shows the unloading unit.

### Detailed description of the embodiments

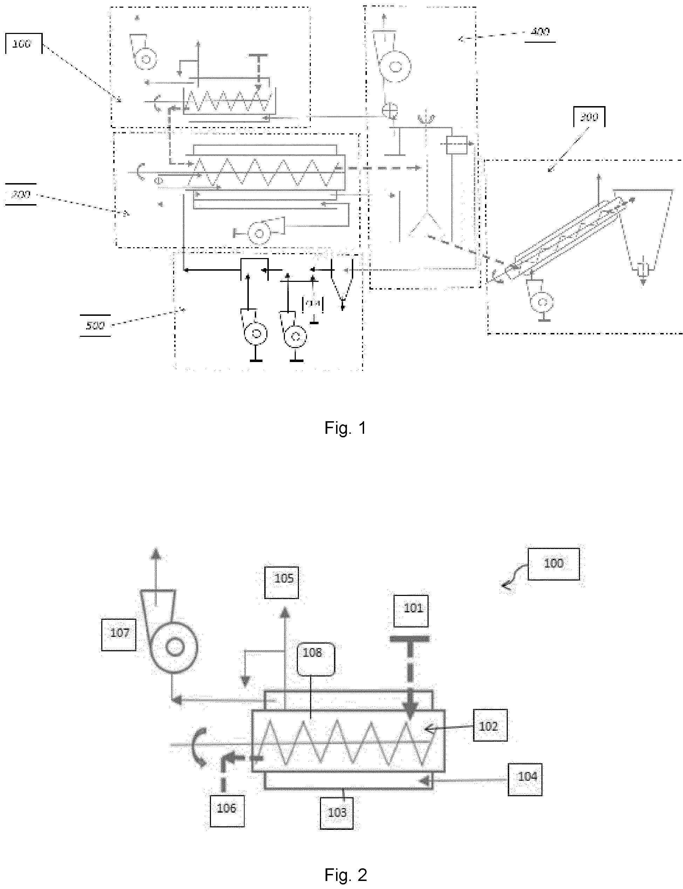

Fig. 1 shows a functional diagram of one of the embodiments of the proposed apparatus to obtain a product containing amorphous silicon dioxide.

The carbon-containing raw material is loaded into the drying unit 100, where it is heated convectively, and the moisture is evaporated from it at the temperature of 150 - 200°C. The raw material can be further processed before loading, or it is also possible to do without pre-treatment.

The dried carbon-containing raw material enters the reactor unit 200 chamber, which contains an activator made of fusible alloy that has thermal contact with the loaded raw material.

In the reactor unit 200, the product is heat-treated at 400-600 °C. Further, the heat-treated product after the reactor unit 200 is sent either directly to the unloading unit 300 for its cooling and subsequent packaging, or before this, it is loaded into the gasification unit 400 to burnout additional carbon in the product in a stream of hot air at a temperature of 400-700 °C (roasting procedure).

The apparatus to obtain a product containing amorphous silicon dioxide may also include an afterburning unit 500, which provides for using the energy of the gases emitted in reactor unit 200 and gasification unit 400 to maintain the necessary temperatures in the drying unit 100, reactor unit 200, and gasification unit 400. The use of the afterburning unit 500 makes it possible to reduce the costs of obtaining the final product and to meet the requirements for the environmental safety of the process.

The principle of the drying unit 100 operation is shown in Fig. 2. Carbon-containing raw materials, such as those of natural moisture (-10-20%), are fed from the raw material loading unit 101 by a feeding inclined screw and a special compensator into the screw drying conveyor 102. The drying screw 102 is rotated by an electric motor with a gearbox and a frequency converter at a preset speed that determines the performance, quality, and time of the moisture evaporation process. Outside the screw conveyor body, there is a heat exchanger 103 jacket into which, in one embodiment of the invention, hot combustion products 104 from the heat exchangers of the reactor unit 200 and gasification unit 400 are supplied for convective heating of the raw materials and evaporation of moisture inside the drying conveyor 102 body. At the opposite end of the screw conveyor from the loading unit of raw materials, there is a sampling unit 105 for evaporated moisture, in the exhaust pipe of which there is drainage of condensed steam disposal. The dry raw material is discharged through a special gate 106 into the chamber of the reactor unit 200 for its further heat treatment. From the outside, the heat exchanger 103 and the drying unit 105 extraction pipes are protected with effective thermal insulation to reduce thermal energy loss. The intensity of drying heat exchange is regulated by the flow of exhaust gas 104 with a fan 107, from which thermal energy in the form of exhaust gases with a temperature of -200-300 °C can enter the plant drying equipment or a local heating plant. The drying process is monitored by the thermocouple 108 installed inside the screw conveyor.

The temperature in the drying unit is 150-200°C to prevent intensive pyrolysis initiation pyrolysis of carbon-containing raw materials and removal of gaseous carbon-containing combustible products together with moisture. The evaporated moisture is discharged into the atmosphere or fed into the gasification unit to improve the quality of the low-carbon/carbon-free product within the roasting process.

It is of fundamental importance to ensure the loading factor of the drying screw 102 is not higher than 40-50% due to the selected sizes and rotation speed ratio of drying and loading screws, and it is also important to have a specially designed compensator.

Rice hulls drying is necessary to avoid possible shutdowns of the apparatus screw conveyors due to the features of wet carbon-containing raw materials to form jams or so-called "tamping plug". In addition, when burning the obtained "dry" pyrolysis or synthesis gas, its calorific value increases, and, accordingly, the cost of processing decreases.

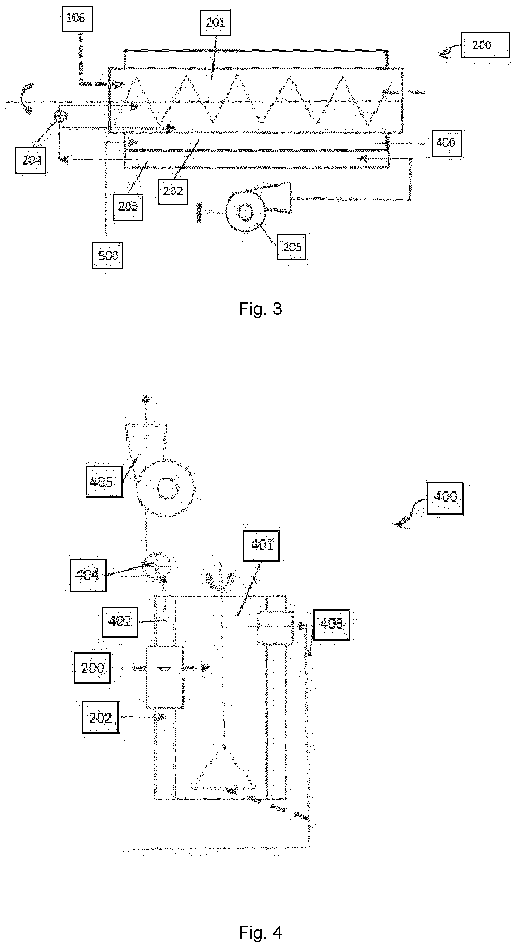

Figure 3 shows an example of the reactor unit 200. Dried carbon-containing raw materials with a temperature of ~ 150-200 °C enter the reactor chamber 201 through a special gate 106 of the drying unit 100. The screw rotates in chamber 201 at a preset speed, which determines the performance, time of the heat treatment process, and mixing of the product as it moves, which is important for uniform heating of the entire product mass to be treated. Inside the chamber 201, there is an activator made of fusible allow (not shown in fig.), which ensures uniform heat distribution to the entire loaded raw material. Such an alloy could be, for example, a fusible alloy based on lead, zinc, tin, etc.

Since the fusible alloy has a low melting point, which usually does not exceed 232 °C, and the chamber temperature is 400 - 600 °C, it is in the liquid phase during the heat treatment. Due to the physical features of heat absorption by metals during phase transitions and its uniform distribution over the entire reactor surface, the activator provides uniform heating and keeps the same temperature throughout the reactor chamber, which allows balancing thermodynamic processes, making them uniform, thereby increasing raw material conversion. The activator retains heat and prevents uncontrolled heat loss, which in turn affects the conversion amount. If there is no activator, the conversion rate is 30-35%, and with it - 60-90%.

The fusible alloy can be located in container mounted on the outside of the rotating screw in the reactor chamber or on the inner walls of chamber. In this case, for the best effect, it should be located along the entire length of chamber 201 in such a way as to ensure maximum thermal contact with the loaded raw material, preferably, in the lower half of the chamber. The container can be made of any material that can withstand high temperatures and has good thermal conductivity, such as steel or copper alloys.

The presence of an activator in the reactor chamber allows for heat treatment of raw materials at a temperature of 400 - 600 °C, resulting in a product of amorphous silicon dioxide. A pyrolysis or gasification process is used as a heat treatment.

Pyrolysis refers to the degradation process of carbon-containing raw materials without an oxidizer - oxidation occurs due to the presence of an oxidizer inside the source raw materials (oxygen in compounds), such as water, CaO, K₂O oxides, etc. Gasification is the degradation process of carbon-containing raw materials by feeding a given flow of oxidizer (air) into the reactor chamber, and pyrolysis in this process also occurs in any case. The flow rate is selected experimentally according to the apparatus features and depends on the type of raw material to be processed.

At the pyrolysis stage (without air supply), the raw material is heated through the body on which the ring heat exchanger 202 is installed. The hot combustion products with a temperature of 500 - 600 °C come from the gas afterburning unit 500 and are further transferred to the heating of gasification unit 400 body. Heat exchanger 202 is effectively insulated on the outside. Pyrolysis of the high-carbon product in the main reactor takes place at 400 - 600 °C for several minutes.

Gasification is used to obtain low-carbon and carbon-free product. The process takes place with a dosed supply of preferably heated air to a temperature of 500 - 600 °C from the air heat exchanger 203 through the distribution controller 204 both inside the rotating screw and further through its hole system into the reactor chamber 201, and through the hole system in the lower part of the reactor chamber itself. The air is pumped into the heat exchanger 203 by the fan 205.

The product is gasified in the reactor chamber at temperature of 400 - 600 °C. Increasing the temperature above these values is undesirable because of the possible silicon dioxide crystallization, which leads to a loss of the desired final product quality. Temperatures are monitored by installed thermocouples. The time required to "burnout" the carbon from the porous rice hulls structure can be 40 - 60 minutes in the reactor. To achieve these conditions, a screw with a length of more than 6 m is designed, a small pitch of inclined guides is selected, and the rotation speed should not exceed 1 - 2 rpm. This optimizes process time, reduces processing costs, and improves the quality of the product obtained. The rotation speed ratio of the drying screw, reactor screw and discharge screw to provide the required presence time / gasification process is decisive. The obtained pyrolysis gas (in pyrolysis mode) or synthesis gas (in gasification mode) flows together with the charred / carbonized product to the gasification unit 400. Sufficiently free gas flow from the reactor chamber to the gasification unit 400 is ensured by the choice of increased radial clearances between the screw and the body, as well as the screw cavity filling ratio of no more than 40 - 50%. To prevent pyrolysis gases from escaping outside into the rooms served, a small vacuum/pressure below atmospheric pressure is provided. Such conditions are monitored by pressure sensors and the exhaust fan features installed on the gasification and drying units.

Fig. 4 shows an example of the gasification unit 400. The carbonized/charred product flows from the reactor unit 200 to the gasifier 401 of gasification unit 400 for further processing. Depending on the processing mode (partial gasification/gray color or full gasification/white color), the process parameters in gasification unit 400 are adjusted. In pyrolysis mode, the charred product enters the inner cavity of reactor unit 200, where it accumulates without air supply for subsequent discharging. To ensure reliable discharge, an agitator driven by an electric motor is used in the gasifier 401. The gasifier body continues to be heated by high-temperature combustion products entering the gasifier 402 heat exchanger jacket from the reactor heat exchanger 202. Temperature and pressure inside the gasifier are monitored by thermocouples at the temperature of 400 - 700 °C and pressure sensors. Heating is necessary to prevent condensation and resins or tar deposition on the gasifier 401 surfaces. Filling the inner cavity with charred product is allowed up to the level of the main screw location and is regulated by the discharge screw speed. The obtained gas with a temperature of 400 - 700 °C freely fills the upper part of the gasifier and is sucked through the pipe 403 into the afterburning unit 500. In the gasification mode, hot air is dosed both into the reactor unit 200 and inside the gasification unit 400 (not shown in this diagram) through holes at the bottom of the body 401 or agitator. The process of carbon burnout (roasting) in the gasifier at temperature of 400 - 700 °C can last an additional 30-60 min. For this purpose, the gasifier size and geometry, as well as the rotation speed and performance of the reactor unit 200 screw and the discharge screw, are selected specially. After heating the gasifier, the combustion products are distributed byregulator 404 to exhaust by fan 405 with discharge to a beneficial use (rice dryer, local heating network, etc.), and to heat the raw material in the drying unit 104. The combustion product exhaust fans 405 and 107 (drying unit) are specially selected for successful parallel operation.

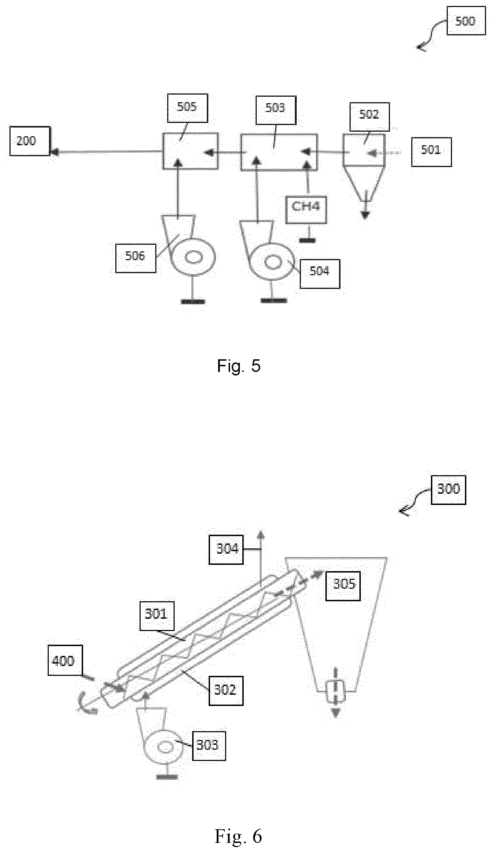

Fig. 5 shows an example of the afterburning unit 500. Low-calorific pyrolysis or synthesis gas 501 flows from the gasifier 401 to the cyclone scrubber 502. Cleaning quality depends on the available differential pressures/centrifugal forces provided and can be controlled by the combustion product exhaust fans 405, 107 in the gasification unit 400 and drying unit 100, and the design features of the entire unit. The cleaning residue is disposed of through the gate valve of the scrubber 502. The purified gas then enters burner 503. The required dosed amount of air is blown from the atmosphere by the fan 504. Pyrolysis or synthesis gas is combusted, producing a temperature of ~ 1000 °C at the outlet of the 503 burner. A standby fuel (e.g., high-calorific methane) can be used for sustained combustion. It is especially important to have sufficient fuel in the start-up modes of the plant until sufficient combustible gas has been obtained. It is possible to feed two fuels to the burner in parallel. Further, a mixer 505 is used to reduce the temperature of the combustion products by diluting with atmospheric air from the fan 506 to the required level ~600 - 700 °C and to feed the combustion products to the heat exchangers of the reactor unit 200, gasification unit 400, and drying unit 100. The process in the afterburning unit 500 is monitored by installed thermocouples and a pressure sensor.

Fig. 6 shows an example of the unloading unit 300. The finished product is transported in a rotating discharge screw 301 from the gasification unit 400 and simultaneously cooled to acceptable temperatures of ~20 - 40 °C for its packaging. The screw speed is adjustable and coordinated with the processing in the reactor unit 200 and gasification unit 400.

Cooling the processed raw materials in the form of a mixture of amorphous silicon dioxide and amorphous carbon is provided by the heat exchanger 302. Atmospheric air for cooling is blown by fan 303. The heat extracted from the product can be diverted from the discharge pipe 304 to a beneficial use (rice dryer, local heating network, etc.). The cooled product enters the discharge hopper 305 and is bagged via its dosing device.

The proposed apparatus within the framework of the claimed invention makes it possible to obtain in a continuous and automated mode different types of products containing amorphous silicon dioxide: high-carbon product (carbon 30 - 50%, SiO₂ 50 - 70%); low-carbon (carbon 5 - 30%, SiO₂ 70 - 95%); and carbon-free (carbon 0.01 - 5%, SiO₂ 95 - 99.99%).

Rice, wheat, oats, or barley hulls, for example, can be used as a carbon-containing raw material.

The following are examples of the use of the proposed invention in the processing of carbon-containing raw materials in the form of rice hulls.

### Example 1.

Rice hulls at a mass flow rate of 4 kg/h (experimental unit capacity of 5 kg/h) and a moisture content of 10% were dried at 200 °C for 5 min. The dried hulls were subjected to pyrolysis without oxygen access in a chamber containing a fusible lead alloy at 450 °C for 20 min. The result was a high-carbon black product containing amorphous carbon (50%) and amorphous silicon dioxide (50%), and a mass flow rate of 1.3 kg/h. The bulk density of the amorphous silica and carbon mixture was 190 kg/m³. The product porosity measured (nitrogen method) is about 60 m²/g.

### Example 2

Rice hulls at a mass flow rate of 2 kg/h and 10% moisture content were dried at 200 °C for 10 min. The dried hulls were subjected to pyrolysis and gasification with an atmospheric air supply in the reactor chamber containing a fusible lead alloy at 600 °C for 30 min. The resulting carbonized product was roasted in airflow in the gasification unit at 600 °C for 40 min.

The result was a low-carbon gray product containing amorphous carbon (10%) and amorphous silicon dioxide (90%); the total mass flow rate of the product is 0.4 kg/h. The product porosity measured by the nitrogen method is about 80 m²/g.

Sorption capacity from solutions with some heavy metals (cadmium, nickel) is up to 100%.

## Claims

1. A method to obtain a product containing amorphous silicon dioxide and amorphous carbon, comprising a steps in which a carbon-containing raw material is dried at a temperature of 150 - 200 ° C and subjected to heat treatment of the dried raw material at a temperature of 400 - 600 ° C, in which heat treatment is conducted in the presence of an activator made of fusible alloy.

2. The method according to claim 1, wherein the heat treatment is a pyrolysis or gasification process.

3. The method according to claim 1, wherein the resulting product is additionally roasted in an oxidizer flow at a temeprature of 400 - 700 °C.

4. The method according to claims 1-3, wherein the gases emitted during the heat treatment of the carbon-containing raw material are used to obtain thermal energy.

5. The method according to claim 1, wherein the carbon-containing raw material are hulls of rice, wheat, oats, or barley.

6. The method according to claim 1, wherein the activator is made of alloy based on lead, zinc, or tin.

7. An apparatus to obtain a product containing amorphous silicon dioxide and amorphous carbon, containing a drying unit, which provides evaporation of moisture from the carbon-containing raw materials at a temperature of 150 - 200 °C, and a reactor unit containing a chamber in which the heat treatment of dried carbon-containing raw materials at a temperature of 400 - 600 °C, while the chamber contains an activator made of a fusible alloy.

8. The apparatus according to claim 7, wherein the reactor unit has the ability to provide oxidizer access to the chamber to perform the product gasification.

9. The apparatus according to claim 7, additionally containing a gasification unit, providing roasting of the product from the reactor unit in the airflow at a temperature of 400 - 700 °C.

10. The apparatus according to claims 7-9, additionally containing an afterburning unit which uses the emitting gases to produce thermal energy used to maintain the required temperatures in the apparatus units.
